(19) Europäisches Patentamt
European Patent Office
Office européen des brevets

(11) EP 3 763 434 A1

(12) **EUROPEAN PATENT APPLICATION**

(43) Date of publication:
**13.01.2021 Bulletin 2021/02**

(21) Application number: **19185302.7**

(22) Date of filing: **09.07.2019**

(51) Int Cl.:
***B01D 61/14*** *(2006.01)*
***B01D 67/00*** *(2006.01)*
***B01D 69/02*** *(2006.01)*
***B01D 71/52*** *(2006.01)*
***B01D 71/68*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solvay Specialty Polymers USA, LLC.**
**Alpharetta, GA 30005-3914 (US)**

(72) Inventors:
- **DI NICOLO', Emanuele**
  **21055 Gorla Minore (IT)**
- **AURILIA, Dario**
  **20023 Cerro Maggiore (IT)**
- **BRANHAM, Kelly D.**
  **Woodstock, GA 30188 (US)**

(74) Representative: **Viola, Laura Maria**
**Solvay S.A.**
**Intellectual Property Department**
**Viale Lombardia, 20**
**20021 Bollate (MI) (IT)**

(54) **MEMBRANE AND METHOD FOR MANUFACTURING THEREOF**

(57) The present invention relates to a composition for the manufacturing of a porous article, notably a membrane, said composition comprising a semicrystalline polymer and an amorphous polymer. The present invention also relates to a method for manufacturing a porous article, notably a membrane, and to the use of the same for purifying fluid(s).

Figure 1

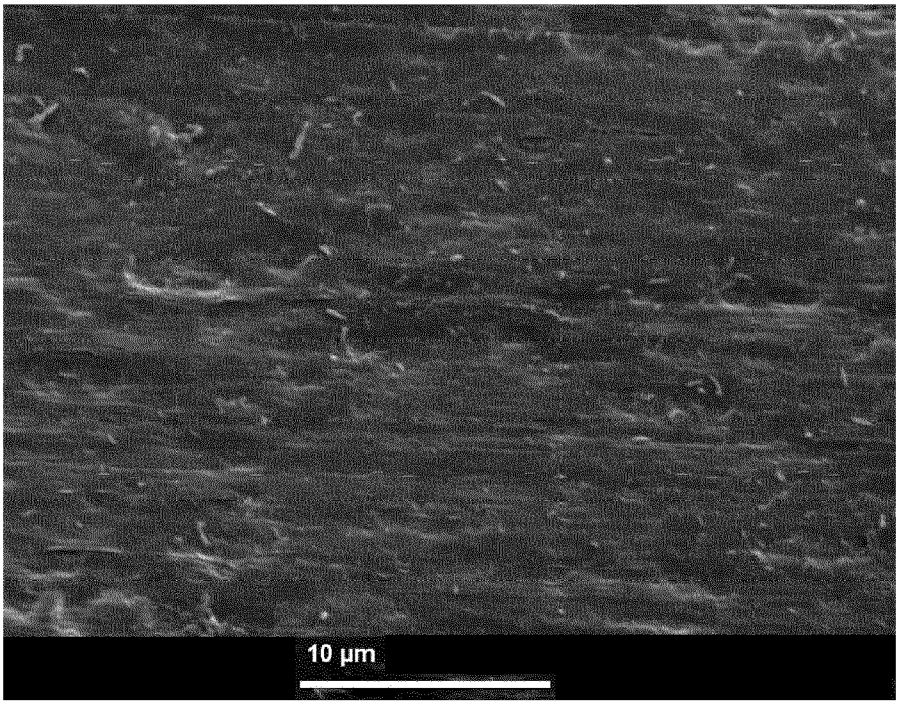


EP 3 763 434 A1

## Description

## Technical Field

The present invention relates to a composition for the manufacturing of a porous article, notably a membrane, said composition comprising a semicrystalline polymer and an amorphous polymer. The present invention also relates to a method for manufacturing a porous article and to the use of the same for purifying fluid(s).

## Background Art

Porous membranes are discrete, thin interface that moderate the permeation of chemical species in contact with them. The key property of porous membranes is their ability to control the permeation rate of chemical species through the membrane itself. This feature is exploited in many different applications like separation applications (water and gas) or drug delivery applications.

Aromatic polymers (such as polysulphones and polyethersulphone), partially fluorinated polymers (such as polyvinylidene fluoride) and polyamides are widely used in the preparation of microfiltration and ultrafiltration membranes due to their good mechanical strength and thermal stability.

Porous membranes made by processing poly(aryl ether ketone) (PAEK) polymers are known in the art, for example from US 4,957,817 and US 5,200,078 (both in the name of **The Dow Chemical Company**).

Porous membranes, both in the form of flat sheets and hollow fibers, have been also prepared starting from blends of PAEK polymers with one additional ingredient and optionally a solvent.

US 7,368,526 **(Porogen Corporation)** discloses porous poly(aryl ether ketone) articles prepared by reacting ketone groups in the backbone of the poly(aryl ether ketone) polymer with a primary amine reagent. In the examples. A film is prepared by compression molding pellets of preblended PEEK/PEI (50:50 by weight) and then the PEI (polyetherimide) component is removed by decomposing it.

US 5,205,968 **(The Dow Chemical Company)** discloses a process for preparing a microporous membrane from an unsulfonated poly(etheretherketone)-type polymer, which comprises the steps of (A) forming a mixture comprising an unsulfonated poly(etheretherketone)-type polymer, an amorphous polymer and a plasticizer, (B) heating the resulting mixture so that the mixture becomes a fluid, (C) extruding or casting the fluid mixture into a membrane, (D) quenching or coagulating the membrane and (E) leaching the membrane under conditions such that at least a portion of said plasticizer and/or of said amorphous polymer is removed from said membrane. As amorphous polymers, a long list is provided in the general description of this patent. Among the other, polysulfones and polyethersulfones are mentioned. The preferred concentration of the poly(etheretherketone)-type polymer in the mixture is from 25 to 75 wt.%; the preferred concentration of the amorphous polymer is from 3 to 65 wt.%. In the examples of US 5,205,968, compositions are exemplified comprising poly(etheretherketone) polymer [PEEK] polymer in amounts of 60 w.% or higher (based on the total weight of said PEEK+PS polymers). On the other hand, the PS polymer is used in the compositions of the examples in an amount of 40 wt.% or lower (based on the total weight of PEEK+PS polymers). The only example comprising an amount of PEEK lower than the amount of PS is composition 2D in Table IIA, wherein PEEK is in an amount of 45.45 wt.% and PS is in an amount of 54.55 wt.% (the amount being based on the total weight of PEEK+PS polymers).

Ternary blends comprising PEEK polymer for the manufacture of membranes have been also described in literature. Sonnenschein M.F. in "Hollow Fiber Microfiltration Membranes from Poly(ether ether ketone) (PEEK)" (J. Appl. Pol. Sci., Vol. 72, 175-181, 1999**)** disclosed the preparation of hollow fibers membranes from composition comprising PEEK, polysulphone (PS) and a mixture of diphenylisophthalate (DPIP) and diphenylterephthalate (DPTP) 75/25 wt.%. The preferred concentration of PEEK was from 24 to 40 wt.% based on the total weight of the composition. Sonnenschein M.F. in "Micro- and Ultrafiltration Film Membranes from Poly(ether ether ketone) (PEEK)" (J. Appl. Pol. Sci., Vol. 74, 1146-1155, 1999**)** disclosed film membranes obtained by extruding polymer blends of PEEK, PS and a small molecule solvent mixture and then by removing the PS and solvent in a subsequent extraction step. Preferred blends for the manufacture of flat sheet membranes comprised PS in an amount below 20 wt.% based on the total weight of the compositions.

US 4,755,540 **(Raychem Limited)** allegedly discloses porous membranes of aromatic polymer, which are prepared by solvent extraction of a polymer which is "partially incompatible" with the aromatic, from a blend of the two. This patent claims that a preferred proportion by weight of said polymeric material (i.e., the poly aryl ether ketone) to the second polymeric material (i.e., the polymeric material that is partially incompatible with the first polymeric material) is between 45/55 and 70/30.

However, the examples provided in this patent show the preparation of membranes from a mixture of 50 wt.% of VICTREX PEEK (Trademark) powder and 50 wt.% of UDEL (Trademark) powder, only. For this specific mixture, the table in column 9 of this patent shows the mechanical properties (in terms of critical strain and tensile strength) for the membranes thus obtained; while the chart in Figure 2 shows the pore size distribution of the membranes. As shown in

the chart in Figure 2, the pore diameters varies between a value higher than 1 μm to a value below 0.01 μm. It is a matter of fact that - as detailed in the last line of the Example 1 - this pore size distribution is typical of a paper.

## Summary of invention

Starting from the description of document US 4,755,540 cited above, the Applicant noted that the porous object obtained following the procedure therein described is not suitable for water purification. Indeed, when performing the process of water purification, care should be taken in order to remove undesirable chemicals, biological contaminants, suspended solids, and gases from water. The Applicant noted that Example 1 of US 4,755,540 describes a process starting from a mixture of 50 wt.% VICTREX PEEK (trade mark) and 50 wt.% UDEL (trade mark), said mixture being processed via blow mold extrusion, thus obtaining a dried object having the pore size distribution typical of a paper, as shown in Figure 2. When properly considering Figure 2, the Applicant noted that the pore diameter distribution comprised a large amount of pore having a diameter higher than 1 μm: as a matter of fact, porous objects characterized by the presence of a population of pores with a diameter larger than 1 μm, are not suitable for removing bacteria and virus. In other words such items are not suitable for obtaining drinking water or more in general, to get real ultrafiltration (UF) membranes.

Thus, the Applicant perceived that the need still exists for porous membranes showing at the same time outstanding mechanical properties and water permeability, notably suitable for use in water filtration.

The Applicant faced the problem of providing porous membranes characterized by outstanding mechanical properties and high water permeability, which can be manufactured in the form of both flat sheet and hollow fibers and which are further suitable for use in water filtration.

The Applicant surprisingly found that the above mentioned problem can be solved by manufacturing a membrane via melt extrusion of a composition comprising selected amounts of at least one poly(aryl ether ketone) (PAEK) polymer and of at least one poly(aryl ether sulfone) (PAES) polymer.

Thus, in a first aspect, the present invention relates to a method [method ($M^Q$)] for the manufacture of a membrane [membrane (Q)] comprising at least one porous layer [layer $L_Q$)], said method comprising

(I) providing a composition [composition (C)] comprising :

- at least one poly(aryl ether ketone) (PAEK) polymer in an amount higher than 50 wt.% and lower than 60 wt.%, and
- at least one poly(aryl ether sulfone) (PAES) polymer in an amount higher than 40 wt.% and lower 50 wt.%,

said amounts being based on the total weight of said composition (C);
(II) pelletizing said composition (C);
(III) melt extruding the pellets obtained in step (II) so as to provide a precursor layer [layer ($L_P$)];
(IV) contacting said layer ($L_P$) as obtained in step (III) with at least one solvent so as to provide a porous layer [layer ($L_Q$)].

The Applicant surprisingly found that starting from a composition comprising the above mentioned PAEK polymer and PAES polymer outside the claimed range, it is not possible to obtain a membrane having either sufficient mechanical strength or a porous surface suitable for filtration.

In a further aspect, the present invention relates to a membrane (Q) comprising at least one layer ($L_Q$) obtained by the above method ($M^Q$).

Advantageously, said layer ($L_Q$) is characterized by a modulus (also referred to as tensile strength or tensile modulus) measured in the machine direction (MD) according to ASTM D638 type V in the range from 250 to 400 MPa.

Advantageously, said layer ($L_Q$) is characterized by a strain at break measured in the machine direction (MD) according to ASTM D638 type V in the range from 15 to 45%.

Advantageously, said layer ($L_Q$) is characterized by a stress at break measured in the machine direction (MD) according to ASTM D638 type V in the range from 11 to 20 MPa.

Advantageously, said layer ($L_Q$) is characterized by a modulus (also referred to as tensile strength or tensile modulus) measured in the transversal direction (TD) according to (ASTM D638 type V) in the range from 25 to 130 MPa.

Advantageously, said layer ($L_Q$) is characterized by a strain at break measured in the transversal direction (TD) according to ASTM D638 type V in the range from 10 to 25%.

Advantageously, said layer ($L_Q$) is characterized by a stress at break measured in the transversal direction (TD) according to ASTM D638 type V in the range from 0.1 to 15 MPa.

Advantageously, said layer ($L_Q$) is characterized by an average pore diameter from 0.07 to 0.11 μm, a bubble point (i.e., largest pore) from 0.30 to 0.41 μm and a smallest pore from 0.06 to 0.10 μm as measured by ASTM F316.

## Drawings

Figure 1 is a picture obtained by SEM obtained on the surface of the article according to Example 1C(*), not within the scope of the present invention.
Figure 2 is a picture obtained by SEM obtained on the surface of the porous membrane according to Example 3.

## Description of embodiments

For the purposes of the present description:

- the use of parentheses before and after symbols or numbers identifying compounds, chemical formulae or parts of formulae has the mere purpose of better distinguishing those symbols or numbers from the rest of the text and hence said parentheses can also be omitted;
- the term "membrane" is intended to indicate to a discrete, generally thin, interface that moderates the permeation of chemical species in contact with it, said membrane containing pores of finite dimensions;
- when the membrane of the invention comprise the porous layer ($L_Q$) as the only layer, the term "membrane (Q)" is used to indicate said layer ($L_Q$) as the two coincide;
- the term "gravimetric porosity" is intended to denote the fraction of voids over the total volume of the porous membrane;
- the term "solvent" is used herein in its usual meaning, that is it indicates a substance capable of dissolving another substance (solute) to form an uniformly dispersed mixture at the molecular level. In the case of a polymeric solute, it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates;
- "melting temperature (Tm)" or "Tm" or "melting point" is intended to indicate the melting temperature measured by differential scanning calorimetry (DSC) according to ASTM D3418 at 20°C/min as described in details in the examples;
- the term "halogen" includes fluorine, chlorine, bromine, and iodine, unless indicated otherwise;
- the adjective "aromatic" denotes any mono- or polynuclear cyclic group (or moiety) having a number of $\pi$ electrons equal to 4n+2, where n is 1 or any positive integer; an aromatic group (or moiety) can be an aryl and arylene group (or moiety).

Membranes containing pores homogeneously distributed throughout their thickness are generally known as symmetric (or isotropic) membranes; membranes containing pores which are heterogeneously distributed throughout their thickness are generally known as asymmetric (or anisotropic) membranes.

Membrane (Q) may be either a symmetric membrane or an asymmetric membrane.

The asymmetric membrane (Q) typically comprises an outer layer containing pores having an average pore diameter smaller than the average pore diameter of the pores in one or more inner layers. Each of said layer(s) can be layer ($L_Q$) as defined above.

Preferably, said membrane (Q) has an average pore diameter as defined above for layer ($L_Q$).

Suitable techniques for the determination of the average pore diameter in the porous membranes of the invention are described for instance in Handbook of Industrial Membrane Technology. Edited by PORTER, Mark C. Noyes Publications, 1990. p.70-78. Pore size of the membrane may be estimated by several techniques including Scanning Electron Microscopy (SEM), and/or measurements of bubble point, gas flux, water flux, and molecular weight cut off.

The membrane (Q) typically has a gravimetric porosity comprised between 5% and 90% by volume, preferably between 10% and 85%, more preferably between 30% and 75%, based on the total volume of the membrane. Good results have been obtained for gravimetric porosity between 60 and 75% by volume.

Suitable techniques for the determination of the gravimetric porosity in membrane (Q) are described for instance by SMOLDERS, K., et al. Terminology for membrane distillation. Desalination. 1989, vol.72, p.249-262.

Membrane (Q) may be either a self-standing porous membrane comprising said layer ($L_Q$) as the only layer or a multi-layered membrane, preferably comprising said layer ($L_Q$) supported onto a substrate.

Said substrate layer may be partially or fully interpenetrated by said layer ($L_Q$).

Said substrate is preferably made of material(s) having a minimal influence on the selectivity of the porous membrane. The substrate layer preferably consists of non-woven materials, glass fibers and/or polymeric material such as for example polypropylene, polyethylene, polyethyleneterephthalate.

Depending on its final intended use, membrane (Q) can be flat, when flat membranes are required, or tubular in shape, when tubular or hollow fiber membranes are required.

Flat membranes are generally preferred when high fluxes are required whereas hollow fibers membranes are particularly advantageous in applications wherein compact modules having high surface areas are required.

When membrane (Q) is flat, its thickness is advantageously from about 10 to about 800 microns, more preferably from about 25 to about 600 microns.

When membrane (Q) is tubular, its outer diameter can be up to 3 mm. When membrane (Q) has an outer diameter comprised between 0.5 mm and 3 mm, it is referred to as hollow fibers membrane. When membrane (Q) has a diameter of less than 0.5 mm, it is referred to as capillary membranes.

Advantageously, said PEAK polymer is selected in the group comprising, preferably consisting of, poly(ether ether ketone) (PEEK), poly(ether ketone ketone) (PEKK), poly(ether ketone) (PEK) and copolymer of PEEK and poly(diphenyl ether ketone) (PEEK-PEDEK copolymer).

As used herein, a poly(aryl ether ketone) (PAEK) denotes any polymer comprising more than 50 mol.% of recurring units ($R_{PAEK}$) comprising a Ar'-C(=O)-Ar* group, where Ar' and Ar*, equal to or different from each other, are aromatic groups.

The recurring units ($R_{PAEK}$) may be selected from the group consisting of units of formulae (J-A) to (J-D) below:

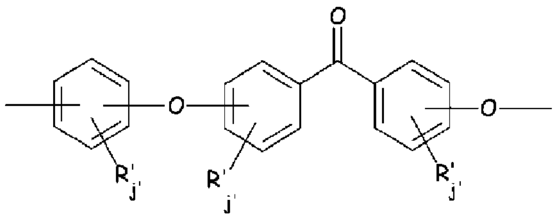

(J-A)

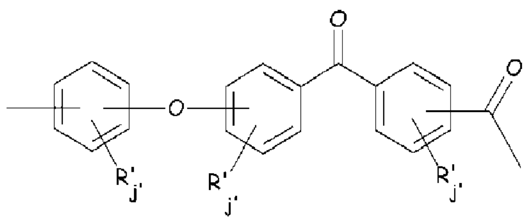

(J-B)

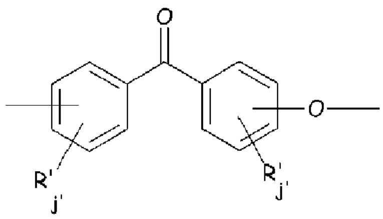

(J-C)

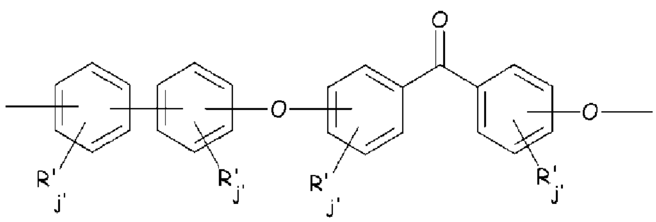

(J-D)

where

each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and j' is zero or an integer ranging from 1 to 4.

In recurring unit ($R_{PAEK}$), the respective phenylene moieties may independently have 1,2-, 1,4- or 1,3-linkages to the other moieties different from R' in the recurring unit ($R_{PAEK}$). Preferably, the phenylene moieties have 1,3- or 1,4-linkages, more preferably they have a 1,4-linkage.

In recurring units ($R_{PAEK}$), j' is preferably at each occurrence zero so that the phenylene moieties have no other

substituents than those linking the main chain of the polymer.

In some embodiments, the PAEK is poly(ether ether ketone) (PEEK). As used herein, a poly(ether ether ketone) (PEEK) denotes any polymer comprising more than 50 mol. % of recurring units ($R_{PAEK}$) of formula (J'-A)

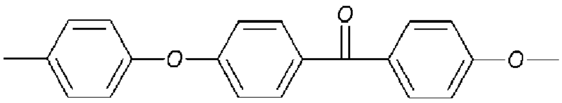 (J'-A)

Preferably at least 60 mol. %, 70 mol. %, 80 mol. %, 90 mol. %, 95 mol. %, 99 mol. %, and most preferably all of recurring units ($R_{PAEK}$) are recurring units (J'-A).

In another preferred embodiment, the PAEK is poly(ether ketone ketone) (PEKK). As used herein, a poly(ether ketone ketone) (PEKK) denotes any polymer comprising more than 50 mol. % of recurring units ($R_{PAEK}$) of formula (J'-B) and formula (J"-B):

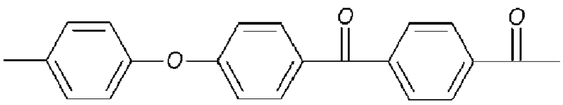 (J'-B)

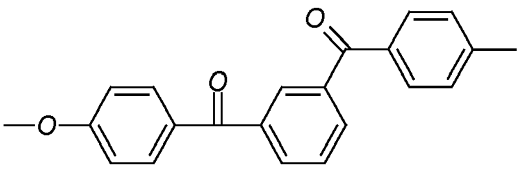 (J''-B)

.

Preferably at least 60 mol. %, 70 mol. %, 80 mol. %, 90 mol. %, 95 mol. %, 99 mol. %, and most preferably all of recurring units ($R_{PAEK}$) are a combination of recurring units (J'-B) and (J"-B).

In yet another preferred embodiment, the PAEK is poly(ether ketone) (PEK). As used herein, a poly(ether ketone) (PEK) denotes any polymer comprising more than 50 mol. % of recurring units ($R_{PAEK}$) of formula (J'-C) :

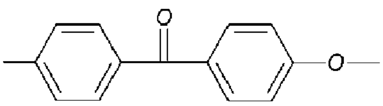 (J'-C)

Preferably at least 60 mol. %, 70 mol. %, 80 mol. %, 90 mol. %, 95 mol. %, 99 mol. %, and most preferably all of recurring units ($R_{PAEK}$) are recurring units (J'-C).

In some embodiments, the PAEK is a PEEK-PEDEK copolymer. As used herein, a PEEK-PEDEK copolymer denotes any polymer comprising more than 50 mol. % of recurring units ($R_{PAEK}$) of formula (J'-A) (PEEK recurring unit) and formula (J'-D) (poly(diphenyl ether ketone)(PEDEK) recurring unit) :

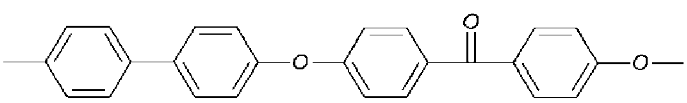 (J'-D)

The PEEK-PEDEK copolymer may include relative molar proportions of recurring units (J'-A) and (J'-D) (PEEK/PEDEK) ranging from 95/5 to 60/40. Preferably the sum of recurring units (J'-A) and (J'-D) represents at least 60 mol. %, 70 mol. %, 80 mol. %, 90 mol. %, 95 mol. %, 99 mol. %, of recurring units in the PAEK. In some aspects, recurring units (J'-A) and (J'-D) represent all of the recurring units in the PAEK.

Most preferably, the PAEK is PEEK or PEEK-PEDEK. Excellent results were obtained when the PAEK polymer used to prepare porous membrane was PEEK.

KETASPIRE® PEEK is commercially available from Solvay Specialty Polymers USA, LLC.

Advantageously, said PAES polymer is selected in the group comprising, preferably consisting of, polyphenylsulfone (PPSU), polyethersulfone (PES) and polysulfone (PSU).

For the purpose of the present invention, a poly(aryl ether sulfone) (PAES) denotes any polymer comprising

at least 50 mol. % of recurring units ($R_{PAES}$) of formula (K) :

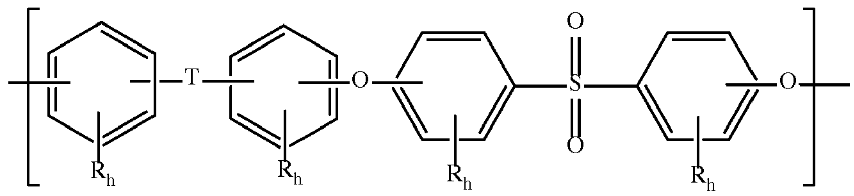
(K)

where

each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;

each h, equal to or different from each other, is an integer ranging from 0 to 4; and

T is selected from the group consisting of a bond, a sulfone group [$-S(=O)_2-$], and a group $-C(R_j)(R_k)-$, where $R_j$ and $R_k$, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. $R_j$ and $R_k$ are preferably methyl groups.

Preferably at least 60 mol. %, 70 mol. %, 80 mol. %, 90 mol. %, 95 mol. %, 99 mol. %, and most preferably all of recurring units in the PAES are recurring units ($R_{PAES}$).

In one embodiment, the PAES is a polyphenylsulfone (PPSU). As used herein, a polyphenylsulfone (PPSU) denotes any polymer comprising more than 50 mol. % of recurring units of formula (K'-A):

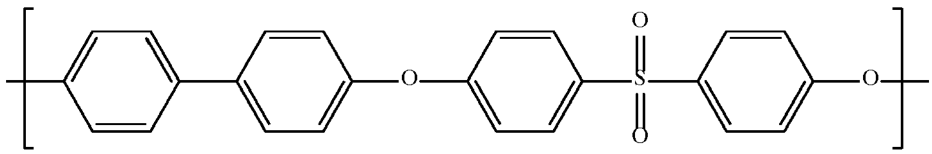
(K'-A).

Preferably at least 60 mol. %, 70 mol. %, 80 mol. %, 90 mol. %, 95 mol. %, 99 mol. %, and most preferably all of the recurring units in the PPSU are recurring units of formula (K'-A).

PPSU can be prepared by known methods and is notably available as RADEL® PPSU from Solvay Specialty Polymers USA, L.L.C.

In some embodiments, the PAES is a polyethersulfone (PES). As used herein, a polyethersulfone (PES) denotes any polymer comprising at least 50 mol. % of recurring units of formula (K'-B):

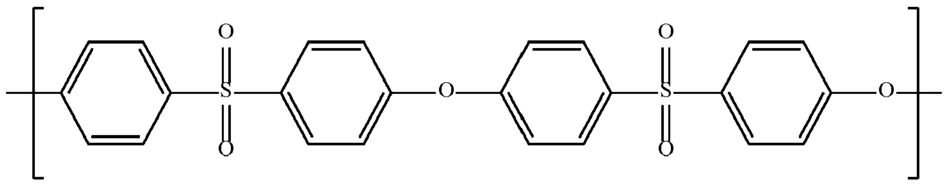
(K'-B).

Preferably at least 60 mol. %, 70 mol. %, 80 mol. %, 90 mol. %, 95 mol. %, 99 mol. %, and most preferably all of the recurring units in the PES are recurring units of formula (K'-B).

PES can be prepared by known methods and is notably available as VERADEL® PESU from Solvay Specialty Polymers USA, L.L.C.

In some embodiments, the PAES is a polysulfone (PSU). As used herein, a polysulfone (PSU) denotes any polymer comprising at least 50 mol. % of recurring units of formula (K'-C):

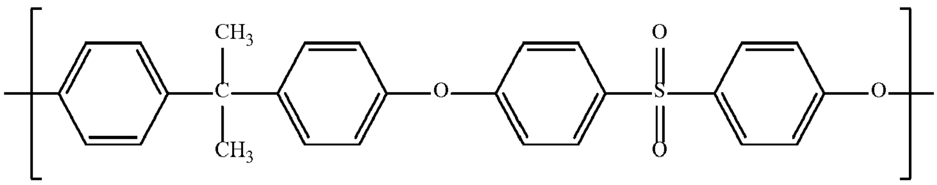

(K'-C).

Preferably at least 60 mol. %, 70 mol. %, 80 mol. %, 90 mol. %, 95 mol. %, 99 mol. %, and most preferably all of the recurring units in the PSU are recurring units of formula (K'-C).

PSU can be prepared by known methods and is available as UDEL® PSU from Solvay Specialty Polymers USA, L.L.C.

Excellent results were obtained when said PEAS polymer used to prepare porous membrane was PSU.

Preferably, composition (C) used in the method ($M^Q$) of the present invention comprises said at least one PAEK polymer in an amount higher than 51 wt.%, more preferably higher than 52 wt.% and lower than 59 wt.%, more preferably lower than 58 wt.%; and said at least one PAES polymer in an amount higher than 41 wt.%, more preferably higher than 42 wt.% and lower 49 wt.%, more preferably lower than 48 wt.%, said amounts being based on the total weight of said composition (C).

In a preferred embodiment, said composition (C) comprises only said PAEK polymer and said PAES polymer.

In a still preferred embodiment, the composition (C) used in the method ($M^Q$) of the present invention consists of:

- at least one PEEK polymer as defined above in an amount higher than 50 wt.% and lower than 60 wt.%, and
- at least one PSU polymer as defined above in an amount higher than 40 wt.% and lower 50 wt.%,

said amounts being based on the total weight of said composition (C).

Optional ingredients can be added to composition (C) according to the present invention. Said optional ingredients can be selected from the person skilled in the art, based on the final use for which the membrane is intended.

When present, said optional ingredients are in a total amount of less than 10 wt.%, preferably less than 5 wt.% and even more preferably less than 1 wt.% based on the total weight of said composition (C).

Suitable optional ingredients are selected from: inorganic fillers, such as (nano)silica, $TiO_2$, ZnO, ZrO, sulfates, NaCl, carbonates; plasticizers comprising at least one solvent, which are selected from the group consisting of: diphenic acid, N,N-diphenylformamide, benzil, anthracene, i-phenylnaphthalene, 4-bromobiphenyl, 4-bromodiphenylether, benzophenone, l-benzyl-2-pyrrolidinone, o,o'-biphenol, phenanthrene, triphenylmethanol, triphenylmethane, triphenylene, 1,2,3-triphenylbenzene, di-phenylsulfone, 2,5-diphenyloxazole, 2-biphenylcarboxylic acid, 4-biphenyl carboxylic acid, m-terphenyl, 4-benzoylbiphenyl, 2-benzoylnaphthalene, 3-phenoxybenzyl alcohol, fluoranthene, 2,5-dipheny1-1, 3,4-oxadiazole, 9-fluorenone, 1,2,dibenzoylbenzene, dibenzoylmethane, p-terphenyl, 4-phenylphenol, 4,4'-bromobiphenyl, diphenylphthalate, 2,6-diphenylphenol, phenothiazine, 4,4'-dimethoxybenzophenone, 9,10-diphenylanthracene, pentachlorophenol, pyrene, 9,9'-bifluorene, mixture of terphenyls, mixture of partially hydrogenated terphenyls, mixture of terphenyls and quarter-phenyls, l-phenyl-2-pyrrolidinone, 4,4'-isopropylidenediphenol, 4,4'-di hidroxybenzophenone, quaterphenyl, diphenyl terephthalate, 4,4'-dimethyl diphenylsulfone, 3,3',4,4'-tetramethyldiphenylsulfone, mixtures thereof.

Preferably, membrane (Q) according to the present invention is used for filtrating biologic solution (e.g. bioburden, virus, other large molecules) and/or buffer solutions (e.g. solutions that may contain small amount of solvents like DMSO or other polar aprotic solvents).

Preferably, membrane (Q) according to the present invention is used to filter oil/water emulsions, such as notably fracking water and the so-called "produced water", or in another words water coming from oil wells, water with high solid content, waste water.

Thus, in a further aspect, the present invention relates to the use of membrane (Q) as defined above, for filtering at least one fluid, said fluid being preferably selected in the group comprising, preferably consisting of: biologic solution, buffer solutions, oil/water emulsions, produced water.

According to another aspect, the present invention relates to a method for filtering at least one fluid, said method comprising contacting said fluid with at least one membrane (Q) as defined above.

Advantageously, said fluid is a liquid phase selected in the groups comprising, more preferably consisting of: biologic solutions (e.g. bioburden, virus, other large molecules); and/or buffer solutions (e.g. solutions that may contain small amount of solvents like DMSO or other polar aprotic solvents); and/or oil/water emulsions, such as notably fracking water and the so-called "produced water", or in another words water coming from oil wells, water with high solid content, waste water.

Composition (C) as defined above can be prepared by methods well known to the person of ordinary skill in the art.

For example, such methods include, but are not limited to, melt-mixing processes. Melt-mixing processes are typically carried out by heating a thermoplastic polymer above its melting temperature thereby forming a melt of the thermoplastic polymer. Such a process may be carried out by heating the polymers above the melting temperature (Tm) of the PAEK polymer to form a melt of the polymers and/or above the glass transition temperature (Tg) of the PAES polymer.

In some embodiments, the processing temperature ranges from about 180-450°C, preferably from about 220-440°C, from about 260-430°C or from about 280-420°C.

Preferably, the processing temperature is at least 15°C, preferably at least 30°C, at least 50°C, at least 80°C or at least 100°C greater than the melting temperature (Tg) of the PAEK polymer.

Preferably, the processing temperature is at least 15°C, preferably at least 30°C or at least 50°C greater than the glass transition temperature (Tg) of the PAES polymer.

When a blend of a PEAK polymer and a PAES polymer is provided, the melt-mixing process is carried out a temperature which the highest of the Tm or the Tg temperatures.

The process for the preparation of the composition can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the polymer composition the constituting components for forming the composition are fed to the melt-mixing apparatus and melt-mixed in that apparatus. The constituting components may be fed simultaneously as a powder mixture or granule mixer, also known as dry-blend, or may be fed separately.

The order of combining the polymers during melt-mixing is not particularly limited. In one embodiment, the polymers can be mixed in a single batch, such that the desired amounts of each component are added together and subsequently mixed.

The method of manufacturing the polymer composition (C) may comprise if needed several successive steps of melt-mixing or extrusion under different conditions.

Under step (II) of the process of the invention, composition (C) is advantageously provided in the form of pellets, which are advantageously used in melt extrusion processes under step (III).

The process itself, or each step of the process if relevant, may also comprise a step consisting in a cooling of the molten mixture.

Under step (III), layer ($L_P$) of the present invention is manufactured from the polymer composition (C) using melt extrusion process.

According to a first preferred embodiment, said precursor layer [layer ($L_P$)] is used as such in step (IV).

According to a second preferred embodiment, said layer ($L_P$) as obtained at the end of step (III) of said method ($M^Q$) is placed onto at least one synthetic fabric having a mesh opening from 20 to 1000 μm, preferably from 25 and even more preferably from 30 μm to 1000 μm.

Advantageously, said synthetic fabric is made of at least one poly(aryl ether ketone) (PAEK) polymer, even more preferably of PEEK polymer.

Suitable synthetic fabrics are commercially available from Sefar AG, under the tradename SEFAR® PEEKTEX.

According to a third embodiment, said layer ($L_P$) is placed onto a second layer ($L_{P2}$), such that said second layer ($L_{P2}$) is in the transversal direction (or perpendicular direction) compared to the layer ($L_P$).

As used within the present description and in the following claims, "transversal direction" and " perpendicular direction" are used as synonyms and are intended to indicate that first layer ($L_P$) is placed onto a second layer ($L_{P2}$) such that the machine direction (MD) of said first layer ($L_P$) (in other words, the direction from which the first layer exits the extruder) is perpendicular to the machine direction (MD) of said second layer ($L_{P2}$).

Preferably, when said synthetic fabric or said second layer ($L_{P2}$) are used, a step of pressing together said layer ($L_P$) with said synthetic fabric or said layer ($L_{P2}$), respectively, is performed.

Advantageously, said step of pressing is performed by working at a temperature higher than 100°C, more preferably higher than 150°C, even more preferably higher than 200°C.

Advantageously, said step of pressing is performed at a pressure of at least 1 tons, more preferably of at least 1.5 tons, even more preferably of a least 2 tons.

At the end of said step of pressing, a multi-layered precursor is obtained comprising a first layer consisting of said layer ($L_P$) and a second layer consisting of said synthetic fabric made of at least one poly(aryl ether ketone) (PAEK) polymer or of said second layer ($L_{P2}$).

Under step (IV), solvent extraction is performed to remove at least a portion of the PAES polymer from layer ($L_P$), so that layer ($L_Q$) is obtained.

Said step (IV) is performed by placing said at least one layer ($L_P$) or said multi-layered precursor in a bath (also referred to as "leaching bath" or "bath for solvent extraction") comprising at least one solvent [solvent (S)].

Suitable solvents (S) are selected from polar aprotic solvents, preferably selected in the group comprising, preferably consisting of:
dimethylacetamide (DMAC), N-Methyl-2-Pyrrolidone (NMP), dimethyl sulfoxide (DMSO), dimethylformamide (DMF), methyl-5-(dimethylamino)-2-methyl-5-oxopentanoate that is commercially available from Solvay under the trademane Rhodiasolv® PolarClean, tetrahydrofuran (THF), dichloro-methane, sulfolane, dihydro-levoglucosenone commercially available under tradename Cyrene® from Circa Group, di-phenylsulfone, ε-Caprolactam.

Advantageously, said step (IV) is performed at a temperature from +5°C to solvent's boiling point.

Preferably, the residence time in said bath is such that at least a portion of said PAES polymer is removed. The time period needed to dissolve at least a portion of the PAES polymer is variable. Preferably, the time period can vary between 30 minutes to 10 hours.

Optionally, one or more optional steps can be performed after step (IV).

For example, the membrane (or said layer ($L_Q$) depending on embodiment) obtained after step (IV) can be dried and/or stretched.

According to one embodiment, before drying, solvent (S) remaining in the membrane can be exchanged with a more volatile, non-polar drying agent [solvent (D)], which possesses a low surface tension compared to solvent (S).

Advantageously, said solvent (D) is a solvent for solvent (S) used in step (IV) and is a non-solvent for the PAEK polymer, such that the possibility of pore collapsing during drying is reduced. Preferably, solvent (D) is selected from isopropanol or isooctane.

The exchange from solvent (S) to solvent (D) may be carried out at temperatures which do not adversely affect the membrane, preferably between about 0°C and about 100°C.

Drying can be performed by working under vacuum.

Membrane (Q) is preferably dried by properly selecting the temperature, such that the membrane (Q) is not negatively affected.

Advantageously, drying is performed at a temperature between 0°C and 200°C, more preferably between 40°C and 100°C.

At the end of step (IV), a membrane (Q) is obtained comprising

- said layer ($L_Q$) as sole layer,
- said layer ($L_Q$) and a substrate as defined above, or
- a first layer comprising layer ($L_Q$) and a second layer consisting of said synthetic fabric made of at least one poly(aryl ether ketone) (PAEK) polymer or of said second layer ($L_{Q2}$).

According to an embodiment, said membrane (Q) can be drawn (or stretched).

Drawing is preferably performed using conventional equipment, such as godets to improve the flux and strength of the membrane.

The person skilled in the art will understand that drawing can be performed before, during or after said step (IV), and/or before, during or after drying.

Preferably, said membrane (Q) is drawn at a temperature that is above the glass transition temperature ($T_g$) of the PAEK polymer and below the crystalline melting point of the PAEK polymer.

According to another embodiment, a step of annealing said membrane (Q), or in other words exposing said membrane (Q) to high temperature) can be optionally performed before or after step (IV) and/or before or after drawing.

Preferably, said annealing step is performed at a temperature above the glass transition temperature ($T_g$) of said PEAK polymer and about 10°C below the melting point of the PAEK polymer.

Preferably, said annealing step is performed for a time between about 30 seconds and about 24 hours.

The invention will be herein after illustrated in greater detail in the following section by means of non-limiting examples.

**Experimental Section**

**Materials**

PEEK polymer: Ketaspire® KT-820 NL was obtained from Solvay Specialty Polymers USA, LLC.

PSU polymer: Udel® P1700, Udel® P3703 were obtained from Solvay Specialty Polymers USA, LLC.

Dimethyl acetamide (DMAc) and isopropyl alcohol (IPA) were obtained from Sigma Aldrich®

PEEK grid: Sefar PEEKTEX® 17-220/56 from Sefar AG.

## Methods

**Step A - Compounding.** A compound comprising 55 wt.% of KetaSpire® KT-820 and 45 wt.% of Udel®P1700 was prepared by blending the components in a Coperion ZSK-26 twin screw extruder (Coperion GmbH, Stuttgart, Germany). The extruder had 12 barrel zones, a heated exit die operating at up to 450 °C and was capable of mass throughputs > 30 kg/hour.

A K-TronT-35 gravimetric feeder (Coperion GmbH, Stuttgart, Germany) was used to feed each material into the feeding section(s) of the extruder to yield the proper mass ratio of the components. The components were melted and mixed with screws designed to achieve a homogeneous melt composition. The actual melt temperature at the exit die was measured with a hand-held device and found to be 390 °C.

The melt stream was cooled in a water bath and fed into a Maag Primo 60E pelletizer (Maag Automatik GmbH, Stuttgart, Germany).

The pellets were collected and kept in sealed plastic buckets until used for melt film extrusion. Typical mass production rates were 10 to 20 kg per hour.

**Step (B) - Film extrusion.** The pellets were dried overnight at 130°C and subsequently fed to a single screw extruder and extruded into a film with a profile temperature of 360 - 380°C using a film die. The film was taken up on a chilled godet roll operating with speed from 0.5 to 2 m/min and temperature from 90 to 150°C.

**Step (C) - Compression molding.** A precursor layer was prepared by bonding two pieces of PEEK/PSU together in perpendicular directions or one PEEK/PSU film and a PEEK grid before extraction. The films were pressed between aluminium foil at a temperature of 380° C, a pressure between 7.5 to 10 tons and for a time frame between 30 to 45 seconds.

**Step (D) - Film extraction.** The precursor layer obtained in the above step was leached in DMAC overnight, decant and add clean DMAC with agitation for 2 hours, decant and add clean DMAC with agitation for 2 hours at room temperature, then transitioned to water with 3 water washes with agitation for 1 hour each.

### Water flux permeability

Water flux (J) through each membrane at given pressure, was defined as the volume which permeates per unit area and per unit time. The flux (J) expressed in L/(h x $m^2$), was calculated by the following equation:

$$J = \frac{V}{A \Delta t}$$

wherein

V (L) is the volume of permeate,
A ($m^2$) is the membrane area, and
$\Delta t$ (h) is the operation time.

Water flux measurements were conducted at room temperature (23°C) using dead-end configuration under a constant nitrogen pressure of 1 bar. Membrane discs with an effective area of 11.3 $cm^2$ were cut from the items stored in water and placed on a metal plate.

### Gravimetric porosity

Gravimetric porosity of the membrane was defined as the volume of the pores divided by the total volume of the membrane.

Membrane porosity ($\varepsilon$) was determined according to the gravimetric method detailed below.

Perfectly dry membrane pieces were weighed and impregnated in isopropylic alcohol (IPA) for 24h. After this time, the excess of the liquid was removed with tissue paper, and membranes weight was measured again. The porosities were measured using IPA (isopropyl alcohol) as wetting fluid according to the procedure described in Appendix of Desalination, 72 (1989) 249-262**.**

$$\varepsilon = \frac{\frac{(Wet - Dry)}{\rho_{liquid}}}{\frac{(Wet - Dry)}{\rho_{liquid}} - \frac{Dry}{\rho_{polymer}}}$$

where

'Wet' was the weight of the wetted membrane,
'Dry' was the weight of dry membrane,
$\rho_{polymer}$ was the density of Ketaspire® PEEK (1.30 g/cm$^3$) and
$\rho_{liquid}$ was the density of IPA (0.78 g/cm$^3$).

**Bubble point and pore size determination**

Membranes bubble points (i.e, the measure of the largest pores), smallest pore size and average pore size were determined following ASTM F316 method, using a capillary flow porometer PoroluxTM 1000 (Porometer-Belgium).
For each test, membranes samples were initially fully wetted using Fluorinert C 43 (fluorinated fluid with a surface tension of 16 dyn/cm). Nitrogen (inert gas) was used.

**Thickness measurement**

Thickness values were measured through a Mitutoyo digimatic indicator (model ID-H0530); for all films and membranes, at least five measurements were performed and the average values were calculated.

**Tensile measurements**

Tensile measurements performed according to ASTM D638 type V; each sample was tested five times; values reported are modulus, stress at break and strain at break.

**SEM characterization**

The membranes were observed with the Stereoscan S200 SEM (Leo Cambridge, England, UK).
A membrane sample was cut and paste horizontally onto SEM stubs covered with carbon tape. The sample was then coated with a gold layer under argon atmosphere to reduce sample charging under the electron beam.
Membranes were manufactured using the compositions as detailed for each Sample below and further in Table 1; the compounding, film extrusion and film extraction procedures were performed as detailed in Steps A, B and D above.
Samples 1C (of comparison), 2C (of comparison) and 3 were prepared starting from KetaSpire® KT-820 and Udel®P1700. Film extrusion was performed using a single screw extruder PD45 (Profile Dies) with a general purpose screw 45/24 and a 40cm film die.
Sample 4 was prepared starting from KetaSpire® KT-820 and Udel®P3703. Film extrusion was performed through a single screw extruder mod 2503 (Brabender) with a screw 19/25 and a 10 cm film width die.
Sample 5 was prepared starting from KetaSpire® KT-820 and Udel®P1700. Film extrusion was performed through a single screw extruder mod 2503 (Brabender) with a screw 19/25 and a 10 cm film width die.
Sample 6 was prepared starting from KetaSpire® KT-820 and Udel®P1700. Film extrusion was performed through a single screw extruder mod 2503 (Brabender) with a screw 19/25 and a 10 cm film width die.

Table 1

| Sample | PEEK/ PSU Wt.% | Porosity (%) | $H_2O$ permeability (LHM - 1bar) |
|---|---|---|---|
| 1C(*) | 60/40 | 72 | 0 |
| 2C(*) | 50/50 | 92 | Not performed |
| 3 | 55/45 | 75 | 143 |
| 4 | 55/45 | 62 | 150 |
| 5 | 55/45 | 63 | 85 |

(continued)

| Sample | PEEK/ PSU Wt.% | Porosity (%) | $H_2O$ permeability (LHM - 1bar) |
|---|---|---|---|
| 6 | 55/45 | 69 | 107 |
| (*) comparison | | | |

Table 2

| Sample | MD Modulus (MPa) | MD Strain @break (%) | MD Stress @break (MPa) | Bubble point (nm) | Average pore (nm) | Smallest pore (nm) |
|---|---|---|---|---|---|---|
| 1C(*) | Not performed | | | | | |
| 2C(*) | Not performed | | | | | |
| 3 | 267 | 18 | 13 | 306 | 72 | 64 |
| 4 | 331 | 27 | 14 | 303 | 101 | 92 |
| 5 | 349 | 42 | 18 | 371 | 83 | 78 |
| 6 | 322 | 31 | 15 | 397 | 102 | 61 |
| (*) comparison | | | | | | |

Sample 1C showed no permeability because its surfaces were completely dense (i.e., not porous) as shown in Figure 1. As a consequence, Sample 1C was not considered as a porous membrane according to the present invention and its mechanical properties were not evaluated.

Also, Sample 2C was found to have insufficient mechanical properties, such that after the solvent extraction step, it was not possible to handle the obtained layer without breaking it.

Samples 3 to 5 according to the present invention had a porous surface (as shown in Figure 2 for Example 3) and showed both good mechanical properties, water permeability, in addition to a pore size distribution typical of a MF/UF membrane.

Membranes were manufactured using the compositions as detailed for each Sample below and further in Table 3; the compounding, film extrusion and film extraction procedures were performed as detailed in Steps A, B, C and D above.

Sample 7 was prepared starting from KetaSpire® KT-820 and Udel®P1700 and coupling the precursor layer obtained after step B with a synthetic fabric made of PEEK.

Sample 8 was prepared starting from KetaSpire® KT-820 and Udel®P1700 . Two precursor layers were prepared and couple perpendicular to each other.

Table 3

| Sample | PEEK/PSU Wt.% | Porosity (%) | $H_2O$ permeability (LHM - 1bar) |
|---|---|---|---|
| 7 | 55/45 | 50 | 48 |
| 8 | 55/45 | 56 | 66 |

Table 4

| Sample | MD Modulus (MPa) | MD Strain @break (%) | MD Stress @break (MPa) | Bubble point (nm) | Average pore (nm) | Smallest pore (nm) |
|---|---|---|---|---|---|---|
| 7 | 544 | 27 | 35 | 402 | 60 | 50 |
| 8 | - | - | - | 406 | 57 | 49 |

## Claims

1. A method [method ($M^Q$2. for the manufacture of a membrane [membrane (Q)] comprising at least one porous layer [layer $L_Q$)], said method comprising

    (I) providing a composition [composition (C)] comprising :

    - at least one poly(aryl ether ketone) (PAEK) polymer in an amount higher than 50 wt.% and lower than 60 wt.%, and
    - at least one poly(aryl ether sulfone) (PAES) polymer in an amount higher than 40 wt.% and lower 50 wt.%,

    said amounts being based on the total weight of said composition (C);
    (II) pelletizing said composition (C);
    (III) melt extruding the pellets obtained in step (II) so as to provide a precursor layer [layer ($L_P$)];
    (IV) contacting said layer ($L_P$) as obtained in step (III) with at least one solvent so as to provide a porous layer [layer ($L_Q$)].

2. The method ($M^Q$4. according to Claim 1, wherein said PEAK polymer is selected in the group comprising, preferably consisting of, poly(ether ether ketone) (PEEK), poly(ether ketone ketone) (PEKK), poly(ether ketone) (PEK) and copolymer of PEEK and poly(diphenyl ether ketone) (PEEK-PEDEK copolymer); and said PAES polymer is selected in the group comprising, preferably consisting of, polyphenylsulfone (PPSU), polyethersulfone (PES) and polysulfone (PSU).

3. The method ($M^Q$6. according to Claim 2, wherein said PAEK polymer comprises more than 50 mol.% of recurring units ($R_{PAEK}$) comprising a Ar'-C(=O)-Ar* group, where Ar' and Ar*, equal to or different from each other, are aromatic groups.

4. The method ($M^Q$8. according to Claim 3, wherein said recurring units ($R_{PAEK}$) are selected from the group consisting of units of formulae (J-A) to (J-D) below:

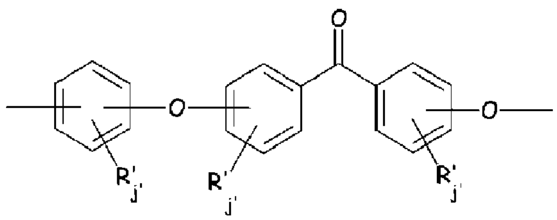

(J-A)

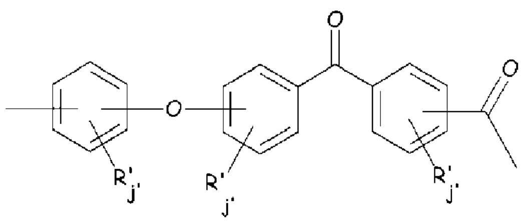

(J-B)

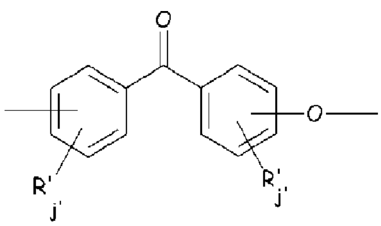

(J-C)

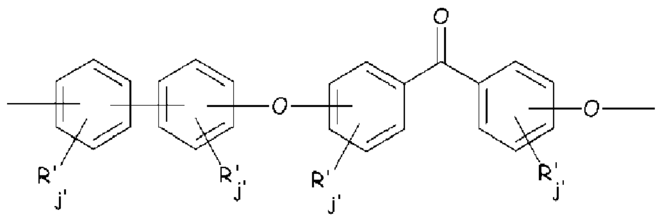

(J-D)

where

each of R’, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and j’ is zero or an integer ranging from 1 to 4.

**5.** The method ($M^{Q}$10. according to Claim 4, wherein said PAEK polymer is selected in the group consisting of:

-- poly(ether ether ketone) (PEEK) comprising more than 50 mol. % of recurring units ($R_{PAEK}$) of formula (J’-A) :

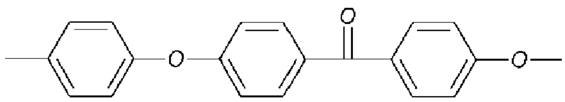

(J'-A)

;

-- poly(ether ketone ketone) (PEKK) comprising more than 50 mol. % of recurring units ($R_{PAEK}$) of formula (J’-B) and formula (J"-B):

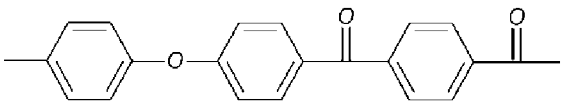

(J'-B)

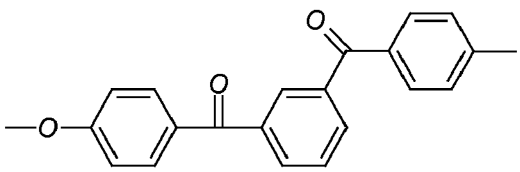

(J''-B)

;

-- poly(ether ketone) (PEK) comprising more than 50 mol. % of recurring units ($R_{PAEK}$) of formula (J’-C) :

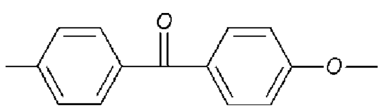

(J'-C)

;

-- PEEK-PEDEK copolymer comprising more than 50 mol. % of recurring units ($R_{PAEK}$) of above formula (J’-A) as (PEEK recurring unit) and formula (J’-D) (poly(diphenyl ether ketone)(PEDEK) recurring unit) :

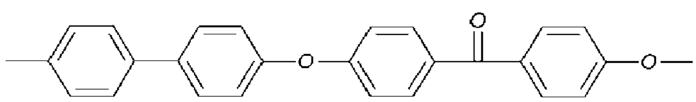

(J'-D)

**6.** The method ($M^{Q}$12. according to Claim 2, wherein said PAES polymer comprises at least 50 mol. % of recurring units ($R_{PAES}$) of formula (K) :

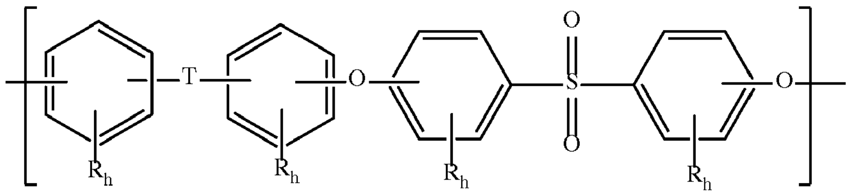

(K)

where

each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
each h, equal to or different from each other, is an integer ranging from 0 to 4; and
T is selected from the group consisting of a bond, a sulfone group [$-S(=O)_2-$], and a group $-C(R_j)(R_k)-$, where $R_j$ and $R_k$, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. $R_j$ and $R_k$ are preferably methyl groups.

**7.** The method ($M^Q$14. according to Claim 6, wherein said PES polymer is selected in the group consisting of:

-- polyphenylsulfone (PPSU) comprising more than 50 mol. % of recurring units of formula (K'-A):

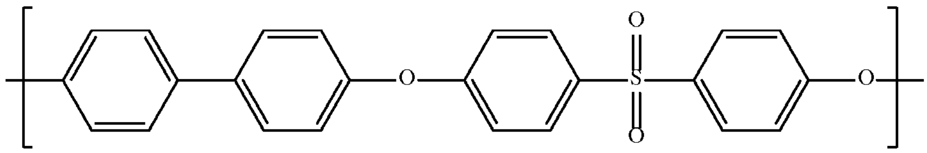

(K'-A);

-- polyethersulfone (PES) comprising at least 50 mol. % of recurring units of formula (K'-B):

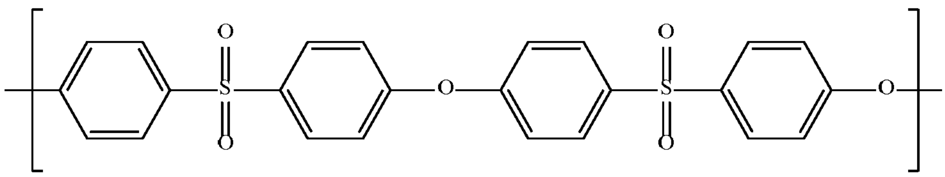

(K'-B);

-- polysulfone (PSU) comprising at least 50 mol. % of recurring units of formula (K'-C):

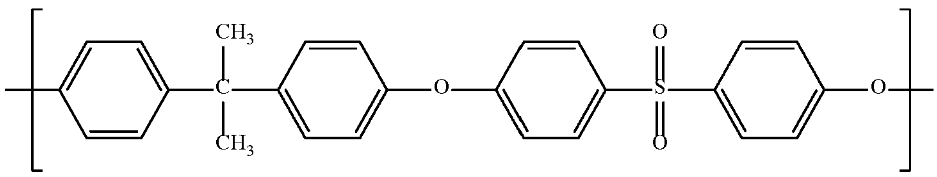

(K'-C).

**8.** The method ($M^Q$16. according to any one of the preceding Claims, wherein in said composition (C), said PAEK polymer is PEEK as defined in Claim 5 and said PAES polymer is PSU as defined in Claim 7.

**9.** The method ($M^Q$18. according to any one of the preceding Claims, wherein said composition (C) comprises one or more additional ingredients in a total amount of less than 5 wt.% based on the total weight of said composition (C).

**10.** The method ($M^Q$20. according to any one of the preceding Claims, wherein said step (IV) is performed by placing said at least one layer ($L_P$) obtained in step (III) in a bath comprising at least one solvent [solvent (S)].

**11.** The method ($M^Q$22. according to Claim 10, wherein said at least one solvent (S) is selected from polar aprotic solvents, selected in the group comprising, preferably consisting of: dimethylacetamide (DMAC), N-Methyl-2-Pyrrolidone (NMP), dimethyl sulfoxide (DMSO), dimethylformamide (DMF), methyl-5-(dimethylamino)-2-methyl-5-oxopentanoate that is commercially available from Solvay under the trademane Rhodiasolv® PolarClean, tetrahydrofuran (THF), dichloro-methane, sulfolane, dihydro-levoglucosenone commercially available under tradename Cyrene® from Circa Group, di-phenylsulfone, ε-Caprolactam.

**12.** The method ($M^Q$24. according to any one of the preceding Claims, wherein said composition (C) consists of :

- at least one PEEK polymer as defined above in an amount higher than 50 wt.% and lower than 60 wt.%, and
- at least one PSU polymer as defined above in an amount higher than 40 wt.% and lower 50 wt.%,

said amounts being based on the total weight of said composition (C).

**13.** The method according to Claim 1, wherein
said layer ($L_P$) as obtained at the end of step (III) is placed onto at least one synthetic fabric having a mesh opening from 20 to 1000 μm, preferably from 25 and even more preferably from 30 μm to 1000 μm; or onto a second layer ($L_{P2}$), such that said second layer ($L_{P2}$) is in the transversal direction (or perpendicular direction) compared to the layer ($L_P$); and
before step (IV), a step of pressing together said layer ($L_P$) with said synthetic fabric or said layer ($L_{P2}$), respectively, is performed, so as to provide a multi-layered precursor comprising a first layer consisting of said layer ($L_P$) and a second layer consisting of said synthetic fabric or of said second layer ($L_{P2}$).

**14.** A membrane [membrane (Q)] comprising at least one porous layer [layer ($L_Q$)] obtained by method ($M^Q$) as defined in any one of Claims 1 to 13.

**15.** A method for filtering at least one fluid, said method comprising contacting said fluid with at least one membrane (Q) as defined in Claim 14.

Figure 1

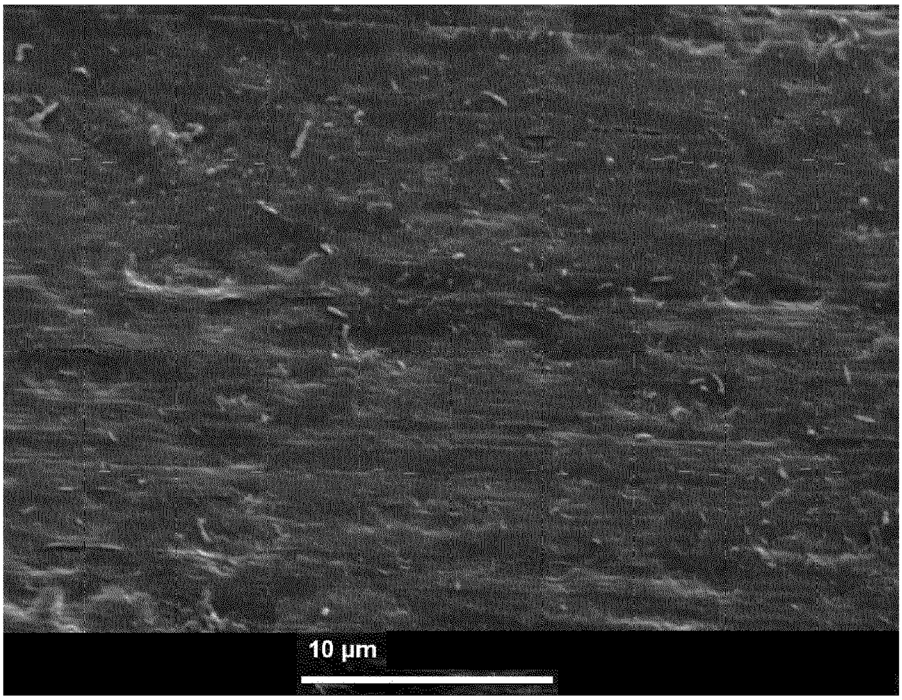


Figure 2

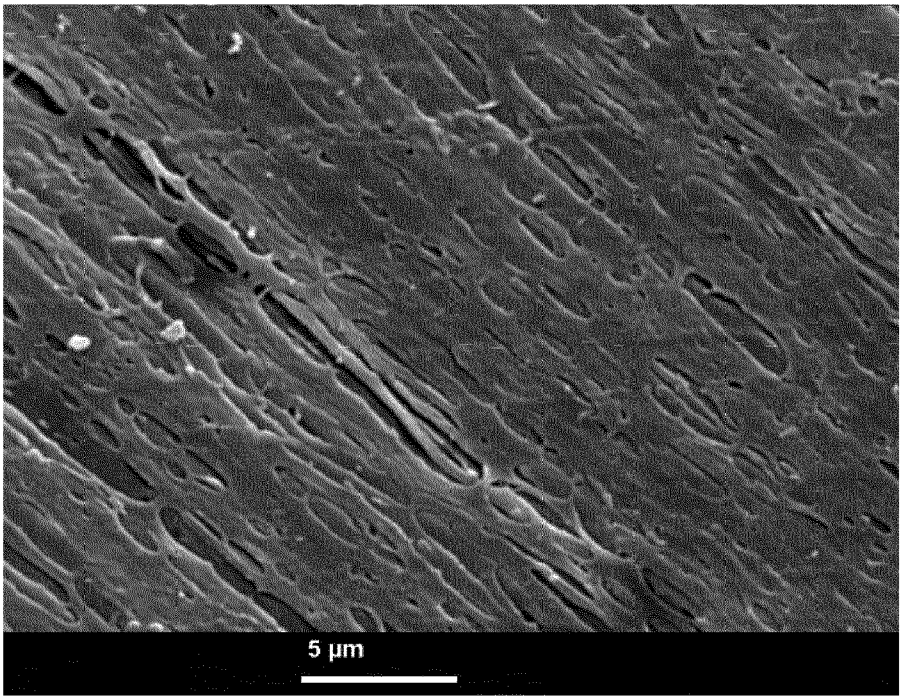

Europäisches Patentamt
European Patent Office
Office européen des brevets

# EUROPEAN SEARCH REPORT

Application Number
EP 19 18 5302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 503 783 A2 (ICI PLC [GB]) 16 September 1992 (1992-09-16) * examples 1-4 * | 1-15 | INV. B01D61/14 B01D67/00 B01D69/02 B01D71/52 B01D71/68 |
| X | EP 0 430 439 A2 (ICI PLC [GB]) 5 June 1991 (1991-06-05) * page 2, line 15 - line 31; examples 1,2 * | 1-15 | |
| X | EP 0 409 416 A2 (ICI PLC [GB]) 23 January 1991 (1991-01-23) * examples 1-3 * | 1-8, 10-12, 14,15 | |

TECHNICAL FIELDS SEARCHED (IPC)
B01D

The present search report has been drawn up for all claims

1

| Place of search | Date of completion of the search | Examiner |
|---|---|---|
| Munich | 10 December 2019 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 18 5302

This annex lists the patent family members relating to the patent documents cited in the above-mentioned European search report. The members are as contained in the European Patent Office EDP file on
The European Patent Office is in no way liable for these particulars which are merely given for the purpose of information.

10-12-2019

| Patent document cited in search report | Publication date | Patent family member(s) | Publication date |
|---|---|---|---|
| EP 0503783 A2 | 16-09-1992 | AU 658602 B2 | 27-04-1995 |
| | | CA 2062449 A1 | 12-09-1992 |
| | | EP 0503783 A2 | 16-09-1992 |
| | | IE 920517 A1 | 23-09-1992 |
| | | JP H05192985 A | 03-08-1993 |
| | | KR 920018121 A | 21-10-1992 |
| | | NZ 241685 A | 27-07-1993 |
| EP 0430439 A2 | 05-06-1991 | AU 6567790 A | 30-05-1991 |
| | | CA 2030241 A1 | 22-05-1991 |
| | | EP 0430439 A2 | 05-06-1991 |
| | | JP H04175140 A | 23-06-1992 |
| | | KR 910009426 A | 28-06-1991 |
| EP 0409416 A2 | 23-01-1991 | AU 629363 B2 | 01-10-1992 |
| | | CA 2020845 A1 | 20-01-1991 |
| | | EP 0409416 A2 | 23-01-1991 |
| | | IE 902257 A1 | 19-06-1991 |
| | | JP H03174228 A | 29-07-1991 |
| | | KR 910002502 A | 25-02-1991 |
| | | ZA 9005273 B | 27-03-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4957817 A
- US 5200078 A
- US 7368526 B
- US 5205968 A
- US 4755540 A


### Non-patent literature cited in the description


- **SONNENSCHEIN M.F.** Hollow Fiber Microfiltration Membranes from Poly(ether ether ketone) (PEEK). *J. Appl. Pol. Sci.,* 1999, vol. 72, 175-181
- **SONNENSCHEIN M.F.** Micro- and Ultrafiltration Film Membranes from Poly(ether ether ketone) (PEEK). *J. Appl. Pol. Sci.,* 1999, vol. 74, 1146-1155
- Handbook of Industrial Membrane Technology. Mark C. Noyes Publications, 1990, 70-78
- **SMOLDERS, K. et al.** Terminology for membrane distillation. *Desalination,* 1989, vol. 72, 249-262
- *Appendix of Desalination,* 1989, vol. 72, 249-262